Europäisches Patentamt

European Patent Office

Office européen des brevets

(19)

(11) Numéro de publication: **0 061 371**

**A1**

(12) # DEMANDE DE BREVET EUROPEEN

(21) Numéro de dépôt: **82400359.4**

(22) Date de dépôt: **02.03.82**

(51) Int. Cl.³: **G 01 P 5/00**
**G 01 F 1/66, G 01 P 3/36**

(30) Priorité: **13.03.81 FR 8105133**

(43) Date de publication de la demande:
**29.09.82 Bulletin 82/39**

(84) Etats contractants désignés:
**DE GB NL SE**

(71) Demandeur: **THOMSON-CSF**
**173, Boulevard Haussmann**
**F-75360 Paris Cedex 08(FR)**

(72) Inventeur: **Arditty, Hervé**
**THOMSON-CSF SCPI 173, bld Haussmann**
**F-75360 Paris Cedex 08(FR)**

(72) Inventeur: **Papuchon, Michel**
**THOMSON-CSF SCPI 173, bld Haussmann**
**F-75360 Paris Cedex 08(FR)**

(72) Inventeur: **Puech, Claude**
**THOMSON-CSF SCPI 173, bld Haussmann**
**F-75360 Paris Cedex 08(FR)**

(74) Mandataire: **Lepercque, Jean et al,**
**THOMSON-CSF SCPI 173, Bld Haussmann**
**F-75360 Paris Cedex 08(FR)**

(54) **Dispositif de mesure de la vitesse d'un fluide et son application à la mesure de débit.**

(57) Dispositif de mesure de la vitesse et du débit d'un fluide comportant un interféromètre en anneau. Cet interféromètre en anneau comporte un guide d'onde en anneau (2) dans lequel circulent en sens inverses deux ondes d'énergie radiante, des moyens (M, M') de séparation et de mélange de ces ondes, et des moyens de détection (D, D') de l'interférence de ces ondes sensibles à leur différence de phase. Ces ondes d'énergie radiante traversent le flux de fluide dont on veut connaitre les caractéristiques de déplacement selon un angle $\Theta$ différent de $\pi/2$.

Application à la mesure de débit d'un fluide.

Fig.1

EP 0 061 371 A1

COMPLETE DOCUMENT

Croydon Printing Company Ltd

# DISPOSITIF DE MESURE DE LA VITESSE D'UN FLUIDE
# ET SON APPLICATION A LA MESURE DE DEBIT

La présente invention concerne un dispositif de mesure de vitesse d'un fluide.

Parmi les diverses méthodes de mesure d'une vitesse instantanée d'un fluide, il est connu dans le cas d'un flux d'hélium hypersonique d'introduire dans ce flux une faible densité d'atomes de sodium. En observant la fluorescence d'un point comme étant un laser à colorant monomode accordé sur la raie D2 du sodium, le profil d'absorption peut être déterminé. Ce profil permet alors de connaitre la vitesse, la température et la pression du fluide au point d'observation. En effet, cette méthode de mesure se base sur les effets d'absorption du laser. Les atomes de sodium introduits dans le fluide sont excités par la rencontre d'un faisceau produit par un laser à colorant. Comme ces atomes se déplacent, leur fréquence d'absorption est décalée par effet Doppler. Ainsi la composante de vitesse dans la direction du faisceau laser peut être déterminée en observant le signal de fluorescence associé avec la raie d'absorption décalée des atomes de sodium. Cette méthode de mesure présente l'inconvénient de nécessiter l'introduction de points diffusants, qui sont des atomes de sodium, dans le flux d'hélium.

L'invention propose un dispositif de mesure réalisé à partir d'un interférométre en anneau.

L'interféromètre en anneau classique a, en effet, pour propriété remarquable de n'être sensible qu'aux seuls effets non réciproques, c'est à dire à ceux qui affectent de manières différentes les deux ondes se propageant en sens inverse dans le dispositif optique formant guide d'onde. Une propriété fondamentale d'un tel interféromètre est sa réciprocité intrinséque ; toute perturbation du trajet optique affecte semblablement les deux ondes.

Mais, il existe, cependant, deux types de perturbations qui affectent cette réciprocité. Il s'agit, d'une part, des perturbations qui varient dans un laps de temps comparable aux temps de propagation des ondes le long du chemin optique de l'interféromètre, et d'autre part, les perturbations, dites "non réciproques", n'ayant pas le même effet sur les ondes selon qu'elles se propagent dans un sens ou dans l'autre le long du chemin optique.

Certains effets physiques détruisent, en effet, la symétrie du milieu dans lequel se propagent les ondes ; notamment l'effet Faraday, ou effet magnéto-optique colinéaire, par lequel un champ magnétique crée une orientation préférentielle du spin des électrons d'un matériau optique, cet effet est mis à profit pour réaliser des dispositifs de mesure de courant ; et l'effet Sagnac, ou effet inertiel relativiste, dans lequel la rotation de l'interféromètre par rapport à un rapport Galliléen détruit la symétrie du temps de propagation. Cet effet est mis à profit pour réaliser des gyromètres.

En l'absence de perturbations "non réciproques", la différence de phase $\Delta\phi$ entre les deux ondes qui se recombinent dans un dispositif de mélange après avoir parcouru le chemin optique, est nulle. Le dispositif de détection et de traitement prend en compte des signaux représentant la puissance optique de l'onde composite obtenue après recombinaison.

Ainsi, il a tout naturellement été envisagé d'utiliser ces propriétés remarquables pour réaliser des gyromètres et des ampèremètres particulièrement sensibles grâce à l'emploi de fibres optiques à faibles pertes et de circuits optiques intégrés, ainsi qu'à la mise en oeuvre de méthodes d'exploitation du signal permettant de détecter de très faibles déphasages optiques.

Moyennant une modification de l'interféromètre de Sagnac classique, tout en utilisant les mêmes méthodes d'exploitation du signal, il est possible de réaliser un vélocimètre.

La présente invention tout en limitant au maximum les pertes de charge ne nécessite plus l'introduction dans le fluide de points diffusants tels que les atomes de sodium précédemment considérés.

L'invention a pour objet un dispositif de mesure de la composante de la vitesse d'un fluide dans une enceinte, caractérisé en ce qu'il comprend un interféromètre en anneau comportant un guide d'onde, une source d'énergie radiante injectant dans ce guide deux ondes circulant en sens inverses et des moyens de séparation et de mélange de ces ondes ; ces ondes traversant le flux de ce fluide selon un angle (θ) différent de π/2 par rapport à la direction de déplacement de ce fluide, des moyens de détection de l'interférence de ces ondes, sensibles à leur différence de phase    , permettant de déterminer ladite composante de la vitesse de ce fluide, cette différence de phase Δφ étant reliée à ladite composante de la vitesse par une relation de proportionnalité.

L'invention a également pour objet un débitmètre comprenant un tel dispositif.

L'invention sera mieux comprise et d'autres avantages apparaîtront à l'aide de la description qui suit et des figures annexées :

- la figure 1 illustre le dispositif de l'invention ;

- la figure 2 est un diagramme représentant la variation de la puissance optique détectée en fonction de la différence de phase entre les deux ondes circulant dans l'anneau de l'interféromètre ;

- les figures 3 et 4 illustrent schématiquement deux aspects particuliers du dispositif de l'invention ;

- la figure 5 illustre un aspect particulier du dispositif selon l'invention ;

- les figures 6 et 7 illustrent deux variantes du dispositif suivant l'invention.

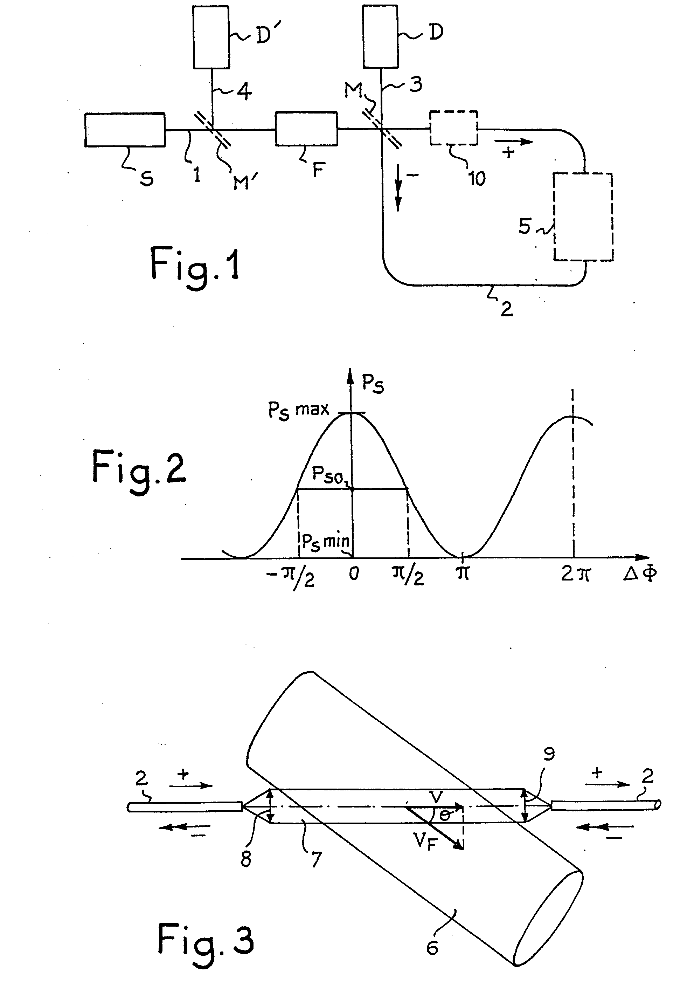

Si on considére le schéma représenté sur la figure 1, on y reconnait des éléments constitutifs d'un interféromètre de Sagnac classique, à cela près que dans le parcours fermé représenté en 5, la lumière se propage sur une distance L dans un fluide d'indice n en mouvement.

Une source laser S envoie un faisceau d'énergie radiante de rayons parallèles 1 vers un dispositif séparateur constitué par une lame semi-transparente M.

L'anneau de l'interféromètre 2 est réalisé, par exemple, à l'aide d'une fibre optique monomode ; ce qui permet de véhiculer de manière commode la lumière jusqu'au lieu de mesure. La méthode de modulation de phase qui peut être utilisée pour la détection du signal, impose une période de modulation qui soit deux fois le temps de transit de la lumière dans l'interféromètre en anneau de manière à ne pas utiliser des fréquences de modulation trop élevées. Il est donc avantageux d'utiliser un parcours optique suffisamment long, d'où l'intérêt d'utiliser la fibre optique monomode que l'on peut réaliser en grande longueur. Cet anneau 2 est rebouclé sur le dispositif séparateur M qui joue également le rôle d'un dispositif mélangeur et définit ainsi une branche de sortie 3. L'anneau est, donc, parcouru par deux ondes se propageant en sens inverses : l'une dans le sens horaire (+), l'autre dans le sens anti-horaire (-). Ces deux ondes se recombinent sur la lame séparatrice M. Le résultat de cette recombinaison peut être observé dans la branche de sortie 3 à l'aide du détecteur D. Une partie des faisceaux est reprise dans le bras d'entrée par la lame séparatrice M, et retraverse le dispositif de filtrage F. A la sortie les deux ondes se recombinent sur la lame séparatrice M'. Le résultat de cette recombinaison peut être observé dans la branche de sortie 4 à l'aide du détecteur D'. Si l'on considère cette branche de sortie 4, le fait d'intercaler le dispositif de filtrage F dans le bras d'entrée de l'interféromètre rend celui-ci strictement réciproque ; il est, alors, parcouru par une onde contenue dans un seul mode optique. Ce dispositif de filtrage est réalisé par un filtre de mode suivi d'un polariseur. En effet le faisceau incident 1 traverse ce filtre et la fraction qui en sort est en mode unique. On peut donc soit considérer le faisceau émergent 3 correspondant à l'interférence des deux faisceaux n'ayant pas retraversé le dispositif de filtrage de mode, mais on peut aussi considérer la partie des faisceaux qui est reprise dans le bras d'entrée par la lame semi-transparente M. Cette partie des faisceaux retraverse le dispositif de filtrage F. A sa sortie les deux faisceaux que l'on envoie dans le bras 4 au moyen de la lame semi-transparente M' sont contenu dans le même mode, ce qui rend l'interféromètre insensible aux perturbations "réciproques".

Soit $\Delta\phi$ la différence de phase entre les deux ondes qui se propagent en sens inverse dans l'anneau et $P_S$ la puissance optique de sortie que l'on peut mesurer dans la branche de sortie 4, en l'absence de perturbation "non réciproque" $\Delta\phi$ est nul.

Selon l'invention, on considère un vélocimètre mettant en oeuvre un interféromètre en anneau, une perturbation "non réciproque" est donc créée lors de l'introduction d'un dispositif 5 dans lequel circule un fluide, les ondes lumineuses se propageant dans ce même fluide.

La différence de phase $\Delta\phi$ n'est plus nulle. La puissance optique $P_S$ évolue selon une loi cosinusoïdale. En effet

$$P_S = P_{1S} + P_{2S} + 2\sqrt{P_{1S}\,P_{2S}}\,\cos(\Delta\phi)$$

ou $P_{1S}$ correspond à l'une des ondes et $P_{2S}$ à l'autre onde. La sensibilité de la mesure pour une valeur $\Delta\phi$ donnée est exprimée par la dérivée de $P_S$.

$$\frac{dP_S}{d(\Delta\phi)} = -2\sqrt{P_{1S}\,P_{2S}}\,\sin(\Delta\phi).$$

La puissance optique $P_S$ dans la branche de sortie est illustrée par le diagramme de la figure 2.

On peut considérer les termes $P_{1S}$ et $P_{2S}$ égaux. Il s'en suit que pour une différence de phase $\Delta\phi = \pi$, la puissance détectée est minimum. Elle passe par un maximum $P_{S_{max}}$ pour $\Delta\phi = 0$ et pour $2\pi$ et ainsi de suite.

Les différentes branches de l'interféromètre peuvent être aussi réalisées en optique intégrée : des guides d'ondes étant réalisés par intégration dans un substrat. On peut ainsi réaliser les moyens de séparation et les moyens de mélange des ondes, ainsi que les modulateurs de phase. Le substrat peut être choisi parmi les matériaux suivants : Niobate de lithium ou tantalate de lithium dans lesquels on a fait diffuser, pour réaliser les guides d'ondes, du titane ou respectivement du niobium. Le substrat peut, aussi, être choisi en arséniure de gallium dans lequel les guides d'onde ont été réalisés par implantation ionique ou protonique.

Le dispositif 5 de la figure 1 est représenté de façon schématique à la figure 3. Un fluide circule à une vitesse $V_F$ dans une canalisation 6.

Les deux ondes symbolisée par les références + et – dans ce qui suit, qui se propagent à l'intérieur de la boucle 2 de l'interféromètre de Sagnac sont collimatés par deux lentilles 8 et 9, le faisceau 7 ainsi formé se propage à l'intérieur du fluide. La vitesse considérée par la suite est la composante $V$ de la vitesse de déplacement $V_F$ du fluide colinéaire à la direction du faisceau lumineux.

La vitesse $v$ de la lumière dans un milieu d'indice $n$ animé d'un mouvement de translation de vitesse $V$ parallèle à la direction de propagation de la lumière est donnée par la relation :

$$v = \frac{V + \dfrac{C_o}{n}}{1 + \dfrac{V}{nC_o}} = C_o\,\frac{\dfrac{1}{n} + \dfrac{V}{C_o}}{1 + \dfrac{V}{nC_o}}$$

si $V \ll c_o$ on peut écrire

$$v \simeq c_o \left(\frac{1}{n} + \frac{V}{C_o}\right) \left(1 - \frac{V}{nC_o}\right)$$

soit $v \simeq \frac{C_o}{n} + V \left(1 - \frac{1}{n^2}\right)$

Lorsque le déplacement n'est pas colinéaire avec le trajet lumineux, V est la composante de la vitesse du milieu parallèle à ce trajet.

Ainsi $v = \frac{C_o}{n} \pm \alpha V$

avec $\alpha = 1 - \frac{1}{n^2}$

$\alpha$ est le coefficient d'entrainement de Fresnel, $C_o$ est la vitesse de la lumière dans le vide. Le signe + correspond à une propagation des ondes lumineuses dans le sens du courant et le signe - à une propagation dans le sens inverse de celui du courant.

Ces ondes + et - se propageant dans l'interféromètre vont donc "voir" des indices de réfraction différents. Il en résultera une différence de chemin optique $\delta$ entre ces deux ondes :

$$\delta = (\Delta_+) - (\Delta_-)$$

$\Delta$ étant la différence entre le chemin optique pour une propagation dans un milieu d'indice n et L le chemin optique pour une propagation dans le vide.

$$\Delta = nL - L$$

$$\Longrightarrow \Delta = \left(\frac{C_o}{v} - 1\right) L$$

on a donc deux valeurs $\Delta+$ et $\Delta-$ :

Ainsi $\Delta+ = \left(\dfrac{C_o \, n}{C_o - \alpha nV} - 1\right) L$

et $\Delta_- = \left(\dfrac{C_o \, n}{C_o + \alpha nV} - 1\right) L$

On trouve que :

$$\delta = \frac{2 L (n^2 - 1) V}{C_o} \quad \text{(en supposant } V \ll C_o)$$

Le déphasage correspondant $\Delta\phi$ est donné par l'expression :

$$\Delta\phi = \frac{2 \pi \delta}{\lambda_o}$$

$$\Delta\phi = \frac{4 \pi L n (n^2 - 1) V}{\lambda_o \cdot C_o}$$

$\lambda_o$ étant la longueur d'onde dans le vide.

On constate que $\Delta\phi$ est proportionnel à V et à L, son signe dépend du signe de V, $\Delta\phi$ est d'autant plus grand que n est grand : il sera donc plus facile de détecter la vitesse de fluides d'indices élevés.

Ainsi lorsque la vitesse de déplacement du fluide augmente, la différence de phase $\Delta\phi$ augmente.

La sensibilité de l'interféromètre est faible si la différence de phase $\Delta\phi$ est peu différente de zéro. C'est le cas dans le dispositif de l'invention si on désire mesurer de faibles vitesses de déplacement du fluide.

Pour augmenter la sensibilité de l'interféromètre on peut introduire un biais "non réciproque" constant dans la phase des deux ondes circulant en sens inverse de façon à déplacer le point de fonctionnement de l'interféromètre.

Dans le cas d'une fonction variant selon une fonction cosinusoïdale, le point de plus haute sensibilité est obtenu par les angles de $(2K + 1) \pi/2$, avec K nombre entier. On peut donc choisir un biais introduisant une variation de phase sur chaque onde en valeur absolue de $\pi/4$ mais de signes contraires. En l'absence de perturbation "non réciproque" la différence de phase devient alors

$$\Delta\phi' = \Delta\phi + \Delta\phi o \quad \text{avec } \Delta\phi o = \pi/2$$

on se place alors au point d'ordonnée $P_{S_o}$ de la figure 2.

Dans le cas la sensibilité est maximum puisque le terme à mesurer est proportionnel à $\cos(\Delta\phi + \frac{\pi}{2})$, c'est-à-dire à $\sin(\Delta\phi)$.

Mais il est difficile de réaliser un dispositif introduisant un "biais non-réciproque" suffisamment stable pour être utilisable. L'instabilité des dispositifs de l'art connu est en général du même ordre de grandeur que les variations de la grandeur à mesurer.

Aussi on peut, comme représenté sur la figure 1, introduire alors sur le parcours des ondes dans l'anneau 2, un modulateur de phase 10 introduisant un effet de phase mettant en jeu un effet réciproque : élasto-optique ou électro-optique par exemple. Ce modulateur est excité de façon à introduire une variation de phase de l'onde qui le traverse qui sort périodiquement ; la période doit être égale à une valeur $2\tau$, $\tau$ étant le temps de parcours d'une onde dans l'anneau.

Du fait de la périodicité de relation suivante est vérifiée :

$$\phi\,(t) = \phi\,(t + 2\tau)$$

Chacune des deux ondes circulant en sens inverses subit également ce déphasage lorsqu'elle traverse le modulateur. Il s'en suit que la différence de phase ($\Delta\phi$ en l'absence de ce déphaseur) devient :

$$\Delta\phi' = \Delta\phi + \phi\,(t) - \phi\,(t + \tau)$$

Si on appelle $\psi\,(\tau)$ la fonction suivante :

$$\psi\,(t) = \phi(\tau) - \phi(t + \tau)$$

du fait de la périodicité de $\phi\,(\tau)$, la fonction $\psi(\tau)$ est symétrique, ce qui signifie que :

$$\psi\,(t) = - \psi\,(t + \tau)$$

Il en résulte que la puissance optique détectée dans chaque branche est de la forme :

$$P = P_1 + P_2 \pm 2\sqrt{P_1 P_2}\ \text{Cos}\,(\Delta\phi + \psi\,(t))$$ présente un spectre de fréquences qui se décompose en :

– une composante continue $P_o$

– une composante P' de fréquence $1/2\tau$ proportionnelle à $\sin\,(\Delta\phi)$ ou composante utile

– une composante P" de fréquence $1/\tau$ proportionnelle à $\text{Cos}\,(\Delta\phi)$

– différentes composantes à des harmoniques d'ordres supérieures, harmoniques dépendant de la forme exacte de la fonction $\phi\,(\tau)$.

Cette dernière fonction, représentant la modulation de phase des ondes circulant en sens inverse dans l'anneau 2, peut être quelconque quant à sa forme.

L'observation des variations lentes de la grandeur "non-réciproque" faisant l'objet de la mesure n'est plus alors limitée que par le bruit de la chaine de détection et d'amplification du dispositif mettant en oeuvre le procédé de l'invention. On obtient donc une très bonne sensibilité de mesure.

On peut également disposer deux modulateurs $\phi_1$ et $\phi_2$ de phase, à effet réciproque respectivement a chaque extrémité de l'anneau 2 de l'interféromètre. Chaque modulateur $\phi_1$ ou $\phi_2$ introduit un déphasage périodique comme précédemment, à la fréquence $1/2\tau$, mais de telle sorte que l'on ait la relation :

$$\phi_1(t) = -\phi_2(t)$$

$\phi_1(t)$ étant le déphasage apporté par le modulateur $\phi_1$ et $\phi_2(t)$ le déphasage apporté par le modulateur $\phi_2$. Si cette relation est vérifiée quelque soit t, on obtient par cette disposition particulière un gain supplémentaire en stabilité dû à la symétrie.

L'application numérique suivante permet de donner un ordre de grandeur du déphasage.

$\lambda = 0,85$ µm, $L = 10$ cm, $V = 1$ m/s

$\Delta\phi = 5.10^{-3} \cdot n(n^2-1)$ rad/ m/s

avec de l'eau d'indice n = 1.33, on obtient :

$\Delta\phi = 5.10^{-3}$ rad/ m/s.

Sachant que l'on peut détecter les déphasages de l'ordre de $10^{-5}$ rad, ceci signifie que l'on pourrait détecter cette vitesse de 1 m/s avec une précision de 5 cm/s.

Avec de l'hélium liquide d'indice n = 1,0206 on obtient $\Delta\phi = 2 \times 10^{-4}$ rad/ m/s.

Un tel procédé peut trouver son application dans tous les domaines où l'on souhaite mesurer des débits de fluides dans des conditions difficiles d'environnement : accessibilité, température, pollution chimique ou électromagnétique... Ce peut être par exemple des mesures concernant l'hélium liquide ou l'hydrogène liquide.

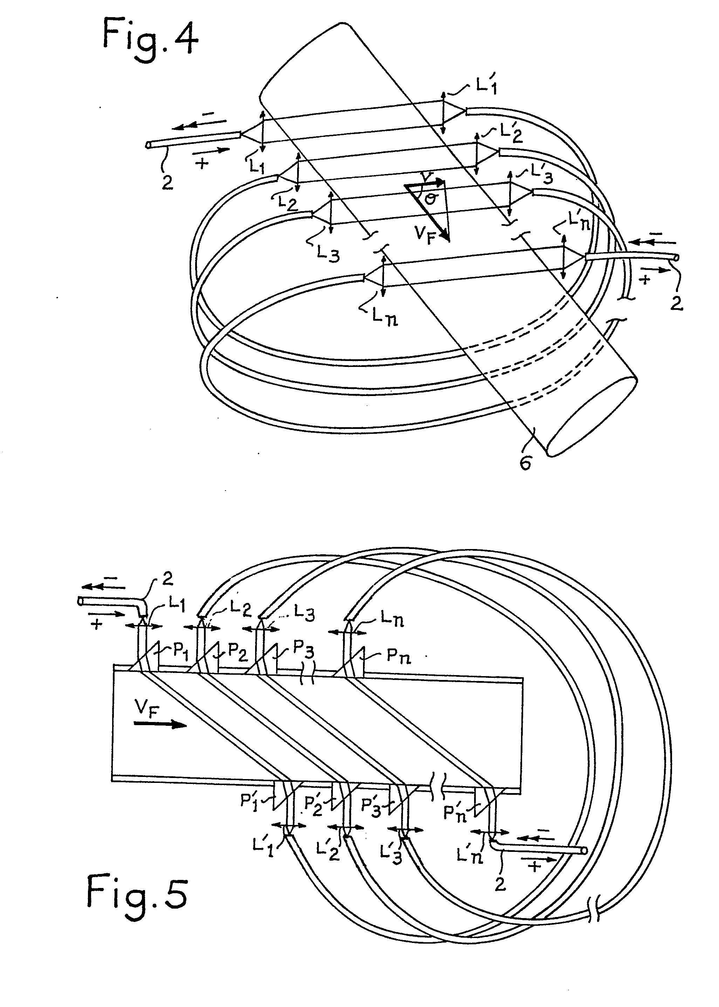

Mais il est possible d'augmenter le déphasage en faisant traverser le fluide plusieurs fois par le faisceau lumineux, comme représenté à la figure 4.

Une canalisation 6 dans laquelle se déplace un fluide est interposée sur le trajet des deux ondes lumineuses. Ces deux ondes sont collimatées par des lentilles $L_i$ et $L'_i$ et déviées par exemple par des prismes $P_i$ et $P'_i$ d'indice de réfraction supérieur à celui du fluide. Ces prismes sont disposés sur des fenêtres transparentes aux ondes, ces fenêtres existant sur la paroi de la canalisation 6. Ce pourrait être aussi tout autre dispositif optique de déviation tels que des miroirs, ou des combinaisons de miroirs. On pourrait remplacer les ensembles lentille plus prisme par des systèmes catadioptriques par exemple. Ces différents systèmes ont comme avantage de n'apporter aucune perturbation à l'écoulement du fluide dans la canalisation.

La composante de vitesse du fluide parallèle aux pinceaux lumineux 11 doit être la plus grande possible d'où un angle θ le plus faible possible.

Dans certains cas il peut être avantageux de profiter des propriétés des ondes optiques guidées dans des guides diélectriques, pour effectuer directement l'intéraction entre le fluide et l'onde évanescente se propageant dans le guide. Pour ce faire, on peut par exemple enlever la gaine 16 d'une fibre optique ; ceci peut être réalisé par abrasion. Ce qui présente l'avantage d'obtenir ainsi une onde guidée sur tout son trajet.

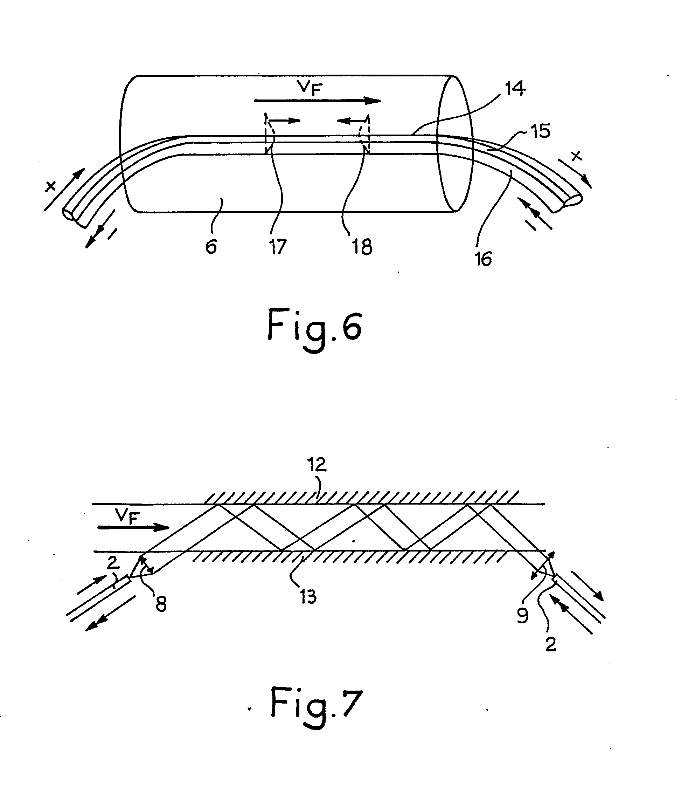

Pour que cette méthode puisse être efficace, il faut que la profondeur de l'onde évanescente dans le fluide soit supérieure à la couche de Langmuir du liquide. La couche de Langmuir correspond à l'épaisseur de la zone entourant le guide dans laquelle la vitesse du fluide n'est pas sa vitesse nominale ; la vitesse du fluide étant nulle le long de ce guide. Pour ne pas atténuer trop rapidement l'onde évanescente, on a intérêt dans ce cas à réaliser le guide en matériau réfringent d'indice aussi voisin que possible de celui du fluide. On a représenté en 17 et 18 à la figure 6 la forme de l'énergie du champ électrique dans le mode pour les deux ondes + et –. 14 est le côté abrasé de la fibre et 15 représente le coeur de la fibre optique.

Grâce aux réflexions multiples des ondes entre deux surfaces réfléchissantes 12 et 13 on peut allonger artificiellement la longueur d'intéraction entre l'ondé optique et le fluide en mouvement, comme représenté à la figure 7.

Ce dispositif peut être utilisé pour réaliser un débitmètre. On peut en effet mesurer la vitesse $V_F$ et l'on connait la section S de la canalisation dans laquelle circule le fluide. Le débit volumique Q du fluide est donné par la formule : $Q = S \times V_F$.

Quand l'indice de réfraction est voisin de 1, comme c'est le cas dans le cas des gaz ou dans certain liquides, la relation donnant le déphasage en fonction de la vitesse V devient :

$$\Delta\phi = \frac{8\pi L (n-1) V}{\lambda_0 \cdot C_0}$$

De même la relation qui donne la réfractivité moléculaire $[n]$ pour une espèce donnée, à savoir :

$$[n] = \frac{n^2 - 1}{n^2 + 2} \cdot \frac{M}{d}$$

où M est la masse moléculaire et d est la densité.

La réfractivité moléculaire $[n]$ est un invariant qui, pour une espèce moléculaire donnée, est indépendante de son état (température, pression, état physique etc ...). Pour les mélanges la réfractivité moléculaire s'obtient en faisant la somme des réfractivités partielles ; si cette loi d'additivité n'est pas vérifiée par l'expérience, on attribue l'écart à des interactions entre les différents constituants.

En fait la réfractivité $\frac{n^2 - 1}{n^2 + 2} \frac{M}{d}$ n'est pas tout à fait constante pour une espèce donnée.

Dans le cas des gaz, n est très voisin de 1, et on peut écrire :

$$\frac{n^2 - 1}{n^2 + 2} \simeq \frac{2(n-1)}{3}$$

où :

$$\frac{(n-1).M}{d} = C^{te}$$

cette relation illustre une loi appelée Loi de Gladstone.

On voit donc que pour une espèce donnée :

$(n-1) = K . d$

S'il y a des fluctuations de densité du fluide, elles se traduisent par des variations de $(n-1)$. Or, le déphasage mesuré par l'interféromètre est effectivement proportionnel à $(n-1)$. Le dispositif peut donc être utilisé comme un débitmètre massique.

On peut ainsi considérer le cas d'un système diphasique, par exemple liquide plus gaz. On peut aussi mesurer les caractéristiques de déplacement d'aérosols ou d'émulsions.

On peut envisager d'utiliser une fibre optique, telle que décrite précédemment ; c'est à dire dont on a abrasé la gaine, enroulée en plusieurs spires, cette fibre étant introduite dans une canalisation en anneau, la longueur de fibre abrasée au contact avec le fluide pouvant ainsi être très longue.

On peut aussi considérer un fluide non guidé dans une canalisation avec plusieurs fibres dans, par exemple, trois directions orthogonales, on peut ainsi connaitre les différentes composantes de la vitesse du fluide.

On peut utiliser la méthode de zéro pour effectuer les mesures de vitesse ou de débit. On annule l'effet d'entrainement de Fresnel créé dans le fluide dont on veut connaitre les caractéristiques par un effet d'entrainement de Fresnel crée dans un autre liquide, dont on connait les caractéristiques, ce peut être par exemple de l'eau ; Ce qui permet d'annuler l'effet et d'obtenir ainsi la valeur désirée.

On peut aussi annuler l'effet en considérant une boucle de mesure utilisant l'effet magnéto-optique, on annule alors l'effet d'entrainement de Fresnel en jouant sur une intensité de courant, ce qui permet d'étalonner le dispositif.

13

## REVENDICATIONS

1. Dispositif de mesure d'au moins une composante de la vitesse d'un fluide dans une enceinte, caractérisé en ce qu'il comprend un interféromètre en anneau comportant un guide d'onde (2), une source (S) d'énergie radiante injectant dans ce guide deux ondes circulant en sens inverses, des moyens (M, M') de séparation et de mélange de ces ondes ; ces ondes traversant le flux de ce fluide selon un angle (θ) différent de π/2 par rapport à la direction de déplacement de ce fluide, des moyens de détection (D, D') de l'interférence de ces ondes, sensibles à leur différence de phase $\Delta\phi$, permettant de déterminer ladite composante de la vitesse de ce fluide, cette différence de phase $\Delta\phi$ étant reliée à ladite composante de vitesse par une relation de proportionnalité.

2. Dispositif selon la revendication 1, caractérisé en ce qu'il comprend au moins un modulateur de phase ($\phi$) à effet réciproque des ondes circulant dans l'anneau (2) commandé par un signal périodique de fréquence $1/2\tau$, placé sur le chemin optique parcouru par les ondes circulant en sens inverses ; $\tau$ étant le temps mis pour chacune des ondes pour parcourir le chemin défini par l'anneau (2).

3. Dispositif selon la revendication 2, caractérisé en ce qu'il comprend deux modulateurs de phase ($\phi_1$, $\phi_2$) à effet réciproque placés en des endroits déterminés du chemin optique, introduisant des déphasages selon deux fonctions périodiques $\phi_1$ (t) et $\phi_2$ (t).

4. Dispositif selon l'une quelconque des revendications 2 ou 3, caractérisé en ce que les modulateurs de phase à effet réciproque mettent en jeu un effet électro-optique.

5. Dispositif selon la revendication 1, caractérisé en ce que le guide d'onde (2) en anneau est réalisé à l'aide d'un fibre optique.

6. Dispositif selon la revendication 1, caractérisé en ce que les moyens de séparation et de mélange (M, M') sont des lames semi-transparentes.

7. Dispositif selon l'une quelconque des revendications précédentes, caractérisé en ce que les moyens de séparation, les moyens de mélange des ondes et les modulateurs de phase sont réalisés par intégration de guides d'ondes sur un substrat.

8. Dispositif selon la revendication 7, caractérisé en ce que le substrat est choisi parmi les matériaux suivant : Niobate de Lithium ou Tantalate de Lithium dans lesquels on a fait diffuser, pour réaliser les guides d'onde, du Titane ou respectivement du Niobium.

9. Dispositif selon l'une quelconque des revendication 7 ou 8, caractérisé en ce que le substrat est en arséniure de gallium dans lequel les guides d'ondes ont été réalisés par implantation ionique ou protonique.

10. Dispositif selon l'une quelconque des revendications précédentes, caractérisé en ce que le flux de fluide est guidé dans une canalisation (6) de section déterminée interceptant le chemin optique des ondes, cette canalisation comportant plusieurs fenêtres transparentes aux ondes, la fibre optique étant coupée et couplée à au moins deux de ces fenêtres.

11. Dispositif selon la revendication 10, caractérisé en ce que la fibre optique (2) est enroulée sur plusieurs spires ; pour chacune de ces spires la canalisation (6) interceptant le chemin optique des ondes guidées.

12. Dispositif selon la revendication 11, caractérisé en ce que le trajet des ondes dans le fluide est dévié à l'aide d'éléments déviateurs qui sont des prismes disposés dans ces fenêtres sur la paroi de la canalisation 6.

13. Dispositif selon la revendication 11, caractérisé en ce que le trajet des ondes dans le fluide est dévié à l'aide d'éléments déviateurs qui sont des miroirs disposés dans ces fenêtres sur la paroi de la canalisation.

14. Dispositif selon l'une quelconque des revendications 12 ou 13, caractérisé en ce que l'on dispose des lentilles convergentes en amont et en aval de ces fenêtres pour effectuer le couplage optique entre les extrémités de la fibre optique et les éléments déviateurs.

15. Dispositif selon la revendication 10, caractérisé en ce que la conduite (6) comporte au moins un élément réfléchissant disposé sur la paroi opposée aux fenêtres d'entrée de ces ondes de manière à allonger le chemin optique des ondes dans le fluide.

16. Dispositif selon la revendication 5, caractérisé en ce que la gaine (16) de fibre optique est enlevée sur une partie (14) de la longueur de la fibre, cette partie de fibre étant plongé dans le fluide dans une direction parallèle à son sens de déplacement.

17. Dispositif selon la revendication 16, caractérisé en ce que l'indice de réfraction du coeur (15) de la fibre optique est peu différent de celui du fluide.

18. Dispositif selon la revendication 16, caractérisé en ce que la canalisation (6) a la forme d'une anneau, plusieurs spires de la fibre optique étant disposées parallèlement au déplacement du fluide.

19. Débitmètre, caractérisé en ce qu'il comporte un dispositif selon l'une des revendications 1 à 18.

Fig.1

Fig.2

Fig.3

# Fig.4

# Fig.5

Fig.6

Fig.7

Office européen
des brevets

**RAPPORT DE RECHERCHE EUROPEENNE**

**0061371**

Numéro de la demande

EP 82 40 0359

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US - A - 3 448 406 (McCLURE)<br><br>* colonne 1, lignes 9-24,39-52; colonne 2, lignes 21-27; figure 1 * | 1,10 | G 01 P 5/00<br>G 01 F 1/66<br>G 01 P 3/36 |
| | --- | | |
| Y | SIEMENS FORSCHUNGS & ENTWICKLUNGS BERICHTE, vol. 9, no. 1, 1980 BERLIN (DE)<br>G. SCHIFFNER: "Lichtleitfaser-Rotationssensor auf der Grundlage des Sagnac-Effekts"<br>pages 16-25<br><br>* page 17, colonne 1, lignes 15-20; figure 2, page 18; page 19, colonne 2, lignes 22-25; figure 3 * | 1,5-7, 11,14 | |
| | --- | | **DOMAINES TECHNIQUES RECHERCHES (Int. Cl. ³)** |
| A | ELECTRONICS LETTERS, vol. 15, no. 18, 30 août 1979 HITCHIN HERTS (GB)<br>B. CULSHAW et al.: "Optical-fibre flowmeter"<br>pages 569-571<br><br>* page 569, colonne 2, lignes 40-42; page 570, colonne 1, lignes 2-6; figure 1 * | 2,16 | G 01 P 3/36<br>3/68<br>5/00<br>5/18<br>G 01 F 1/66 |
| | --- | | |
| A | DE - A - 2 931 443 (SIEMENS AG)<br><br>* page 11, ligne 5 - page 12, ligne 21; figure 1 * | 1,5,11 | |

Le présent rapport de recherche a été établi pour toutes les revendications

| Lieu de la recherche | Date d'achèvement de la recherche | Examinateur |
|---|---|---|
| La Haye | 21-06-1982 | HANSEN |